# EUROPÄISCHE PATENTSCHRIFT

(11) **EP 1 860 840 B1**
(45) Veröffentlichungstag und Bekanntmachung des Hinweises auf die Patenterteilung: **30.07.2014**
(21) Anmeldenummer: 07010042.5
(22) Anmeldetag: 21.05.2007
(51) Int. Cl.: H04W 12/04, H04W 12/06, H04L 29/06, H04L 12/22, H04L 29/08

(54) **Verfahren zum Personalisieren eines Sicherheitsmoduls eines Telekommunikations-Endgeräts**
Method for personalising a safety module of a telecommunications terminal
Procédé de personnalisation d'un module de sécurité d'un terminal de télécommunication

(30) Priorität: 23.05.2006 DE 102006024041
(43) Veröffentlichungstag der Anmeldung: 28.11.2007
(60) Teilanmeldung: 14002040.5
(73) Patentinhaber: Giesecke & Devrient GmbH, 81677 München (DE)
(72) Erfinder: Rankl, Wolfgang, 81825 München (DE); Müller, Bernd, 81929 München (DE); Stöhr, Volker, 81827 München (DE); Vedder, Klaus Dr., 85402 Kranzberg (DE); Otte, Günter, 80686 München (DE); Richter, Oliver, 81735 München (DE); Garbers, Christian, 85774 Unterföhring (DE)

(56) Entgegenhaltungen:
- US-A- 5 557 679
- US-A1- 2005 021 962

## Beschreibung

Die Erfindung betrifft die Personalisierung eines Sicherheitsmoduls in einem Telekommunikations-Endgerät. Unter Telekommunikations-Endgeräten sollen alle Geräte verstanden werden, die über GSM, UMTS, CDMA oder ähnliche Netzwerke in einem PLMN (public land mobile network) kommunizieren, also insbesondere Mobilfunkgeräte, PDAs und dergleichen. In diesem Anwendungszusammenhang sind beispielsweise die Authentisierung des Telekommunikations-Endgerätes gegenüber dem Mobilfunknetzwerk oder die Authentisierung des Nutzers gegenüber dem Telekommunikations-Endgerät als Sicherheitsfunktionen anzusehen. Solche Sicherheitsfunktionen laufen über im Telekommunikations-Endgerät enthaltene Sicherheitsmodule ab, üblicherweise auf SIM-Karten. Neuerdings ist vorgeschlagen worden, solche Sicherheitsmodule als erweitertes TMP (trusted platform module) auszubilden. TPMs sind anders als herkömmliche SIM-Karten fest in das Telekommunikations-Endgerät integriert.

Damit sich ein Telekommunikations-Endgerät in ein Mobilfunknetz einbuchen und sich gegenüber dem Trustcenter eines Mobilfunkbetreibers authentisieren kann, muss das Sicherheitsmodul des Telekommunikations-Endgerätes mit den notwendigen Daten ausgestattet werden, insbesondere mit benötigten geheimen Authentisierungsalgorithmen und geeigneten Schlüsseln des jeweiligen Netzbetreibers. Der Prozess des Ausstattens des Sicherheitsmoduls mit diesen notwendigen netzbetreiberspezifischen Daten soll im Zusammenhang mit der vorliegenden Erfindung als Personalisieren verstanden werden. Die Daten selbst werden nachfolgend netzbetreiberspezifische Daten genannt.

Bisher werden meist Sicherheitsmodule an die Kunden geliefert, die bereits mit diesen netzbetreiberspezifischen Daten ausgestattet sind. Dies gilt für herkömmliche SIM-Karten für Mobilfunkgeräte. Im Fall von fest an die Telekommunikations-Endgeräte gebundenen Sicherheitsmodulen besteht der Nachteil, dass bereits bei der Produktion des Sicherheitsmoduls und vor dessen Einbau in ein Telekommunikations-Endgerät der Netzbetreiber bekannt sein muss bzw. verschiedene Sicherheitsmodule für verschiedene Netzbetreiber hergestellt werden müssen, was eine kostengünstige einheitliche Produktion identischer Sicherheitsmodule ausschließt.

EP 1 002 440 B1 offenbart ein Verfahren zum kundenseitigen Personalisieren von GSM-Chips über eine Luftschnittstelle. Ein vom Netzbetreiber vorpersonalisierter Chip wird automatisch endpersonalisiert, wenn sich der Teilnehmer erstmals in das Teilnehmemetzwerk einbucht. Beim Endpersonalisieren wird, nachdem eine Verbindung zwischen Telekommunikations-Endgerät und Trustcenter des Netzbetreibers aufgebaut wurde, ein neuer, zweiter, geheimer Schlüssel mit dem Trustcenter ausgehandelt und anschließend zum Einbringen in das Sicherheitsmodul an das Telekommunikations-Endgerät übermittelt. Es bleibt der Nachteil bestehen, dass das Sicherheitsmodul bereits netzbetreiberspezifische Daten enthalten muss, wenn es in das Telekommunikations-Endgerät eingebracht wird.

US 5557679 B1 beschreibt ein System zum Personalisieren von SIM-Karten über ein Mobilfunknetzwerk. US 2005/0021962 A1 betrifft die Übertragung von Schlüsseln zu einer Produktionsumgebung für Installations-CDs.

EP 0 956 730 B1 offenbart ein Verfahren zum Zuteilen einer temporären Benutzeridentifikation über die Luftschnittstelle. Diese Benutzeridentifikation wird nur für einen speziellen Verbindungsaufbau angefordert und genutzt. Eine dauerhafte Personalisierung des Telekommunikations-Endgerätes findet nicht statt.

Aufgabe der Erfindung ist es, Maßnahmen vorzuschlagen, die es in effizienter und sicherer Weise erlauben, ein Sicherheitsmodul zu personalisieren, welches in einem Telekommunikations-Endgerät fest eingebaut ist und noch keinerlei netzbetreiberspezifische Daten enthält.

Diese Aufgabe wird durch ein Verfahren mit den Merkmalen der nebengeordneten Ansprüche gelöst. In den davon abhängigen Ansprüchen sind vorteilhafte Ausgestaltungen und Weiterbildungen der Erfindung angegeben.

Die Erfindung basiert auf dem Grundgedanken, dass zur Personalisierung notwendige Identifikationsdaten, die der Netzbetreiber dem Benutzer nach Vertragsabschluss übermittelt, dem Benutzer zunächst außerhalb des Telekommunikations-Endgerätes vorliegen und vom Benutzer in das Sicherheitsmodul des Telekommunikations-Endgerät überführt werden. Diese Identifikationsdaten können dem Benutzer in verschiedener Weise vorliegen und entsprechend auf verschiedene Weise in das Sicherheitsmodul des Telekommunikations-Endgerätes eingebracht werden, nämlich beispielsweise durch manuelles Eingeben von alphanumerischen Ziffernfolgen, Einlesen eines RFID-Tags, Übertragen der Daten über Bluetooth- oder WLAN-Schnittstelle, Einscannen eines Barcodes, Fotografieren und anschließendes OCR-Extrahieren, Verarbeiten akustischer Information und dergleichen.

Die Erfindung ermöglicht es, einheitliche Sicherheitsmodule zu produzieren und in die Telekommunikations-Endgeräte einzubauen. Eine vorherige Kenntnis des später in Anspruch genommenen spezifischen Netzbetreibers ist nicht nötig, da im Gegensatz zum Stand der Technik keine Vorpersonalisierung zu erfolgen hat. Die Identifikationsdaten können, nachdem sie durch das Telekommunikations-Endgerät aufgenommen worden sind, direkt von dem Telekommunikations-Endgerät ohne Medienbruch zur Personalisierung verwendet werden. Eine Änderung derzeitiger Mobilfunknetze ist nicht notwendig. Auch ein Wechsel des Netzbetreibers ist mit demselben Sicherheitsmodul möglich.

Das Personalisierungsverfahren wird fortgesetzt, indem das Telekommunikations-Endgerät Verbindung zu einem Trustcenter aufnimmt. Die notwendigen Daten zur ersten Kontaktaufnahme mit dem Trustcenter können entweder einheitlich auf allen Sicherheitsmodulen vorhanden sein, beispielsweise Schlüssel und Algorithmen eines virtuellen Netzbetreibers (MVNO), der nur einmalig zum ersten Einwählen beim Trustcenter genutzt wird, jedoch in keinerlei Verbindung zum spezifischen Netzbetreiber steht, an dessen Bedürfnisse das Endgerät durch die Personalisierung angepasst werden soll, oder aber vom Benutzer gemeinsam mit den Identifikationsdaten an das Sicherheitsmodul übertragen werden.

In einem weiteren Schritt des Personalisierungsverfahrens werden die Identifikationsdaten an das Trustcenter übertragen. Die Identifikationsdaten umfassen die dem Netzbetreiber nach Vertragsabschluss bekannten Anwenderdaten (subscription data), um diesen identifizieren zu können, beispielsweise für Informations- und Abrechnungszwecke. Weiterhin können die Identifikationsdaten noch weitere Informationen enthalten, beispielsweise den Netzbetreiber, das Trustcenter, den Zugangsmodus und dergleichen. Diese Identifikationsdaten enthalten alle notwendigen Informationen, die der Anwender benötigt, um nach dem Einbringen dieser Daten in das Sicherheitsmodul und der Verbindungsaufnahme mit dem Trustcenter den Personalisierungsprozess automatisch fortzusetzen, ohne weitere Maßnahmen treffen zu müssen.

Das Trustcenter wertet die empfangenen Identifikationsdaten auf Korrektheit aus und baut im positiven Fall eine sichere Verbindung zum Telekommunikations-Endgerät auf. Weiterhin kann das Trustcenter den Identifikationsdaten entnehmen, welche netzbetreiberspezifischen Personalisierungsdaten der Anwender benötigt, und initiiert ein Übertragen dieser Daten auf das Sicherheitsmodul des Telekommunikations-Endgerätes. Es erfolgt also eine vollautomatische Personalisierung. Der Nutzer kann gegebenenfalls über den Verlauf des Prozesses, beispielsweise über ein Display, informiert werden.

Es ist bevorzugt, dass das Telekommunikations-Endgerät in einen speziellen Modus versetzt wird, bevor die Identifikationsdaten eingebracht werden. Der Personalisierungsprozess wird dadurch vereinfacht, da in diesem speziellen Modus keine anderen Funktionen aktiv sind und dadurch eine Personalisierung automatisch ablaufen kann. Weiterhin kann der Modus so eingerichtet sein, dass eine sichere Kommunikation gewährleistet ist. Dieser spezielle Modus soll in Verbindung mit der vorliegenden Erfindung Personalisierungsmodus genannt werden.

Nach der Übertragung der Personalisierungsdaten kann das Telekommunikations-Endgerät in den normalen Betriebsmodus zurückversetzt und zu gewöhnlichen Kommunikationszwecken genutzt werden. Wechselt das Telekommunikations-Endgerät den Nutzer, beispielsweise durch Verkauf, Verleih oder Verschenken, oder wechselt der Nutzer den Netzbetreiber, so kann der beschriebene Personalisierungsprozess erneut im Personalisierungsmodus gestartet werden. Dieser kann durch ein Passwort gesichert sein, um versehentliche oder missbräuchliche Verwendungen zu verhindern.

Nachfolgend wird die Erfindung anhand der begleitenden Zeichnungen beispielhaft erläutert. Darin zeigen:
- Fig.1: einen Überblick über ein für den erfindungsgemäßen Personalisierungsprozesses geeignetes System,
- Fig. 2: eine in XML kodierte Kommandosequenz,
- Fig. 3: einen Prozessverlauf innerhalb eines MIDlets,
- Fig. 4: einen Kommunikationsprozess zwischen einem Sicherheitsmodul, einem MIDlet und einem Server,
- Fig. 5: einen Kommunikationsprozess zwischen einem MIDlet und einem Server,
- Fig. 6: einen Überblick über die Architektur eines Systems zum Management von Sicherheitsmodulen über eine Luftschnittstelle und
- Fig. 7: eine Darstellung des Lebenszyklus eines Sicherheitsmoduls.

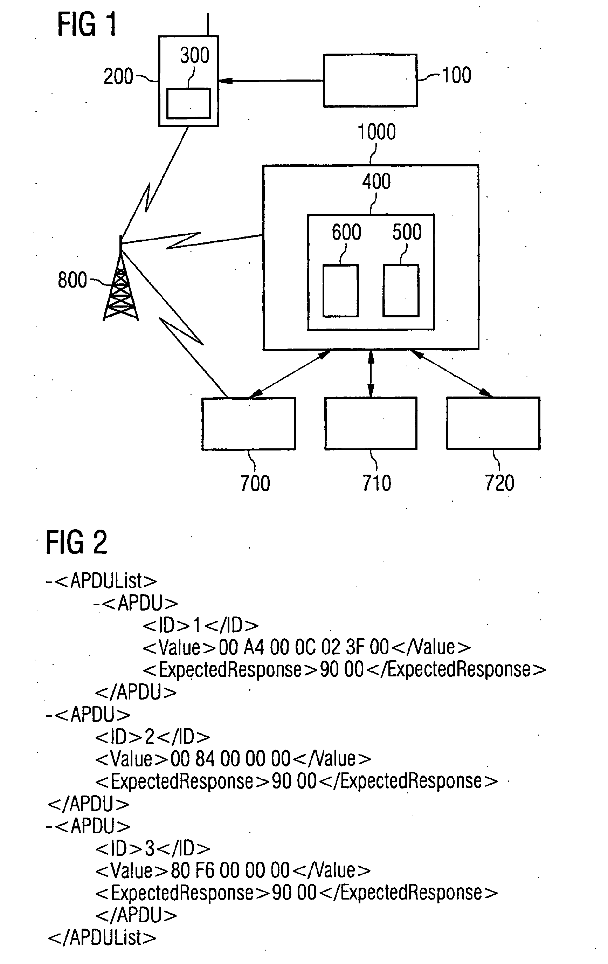

Ein bevorzugtes Ausführungsbeispiel eines erfindungsgemäßen Personalisierungsprozesses wird im folgenden, aufgegliedert in einzelne Schritte, genauer dargestellt. Fig. 1 zeigt einen Überblick über ein zur Durchführung des Personalisierungsprozesses geeignetes System. Dieses umfasst Identifikationsdaten 100, ein Telekommunikations-Endgerät 200, außerhalb dessen die Identifikationsdaten 100 vorliegen und welches ein Sicherheitsmodul 300 besitzt, ein Trustcenter 400 eines Personalisierers 1000, welches eine Datenbank 500 und einen Server 600 umfasst, einen oder mehrere Netzbetreiber 700, 710, 720, und ein Mobilfunknetzwerk 800. Es folgt die detaillierte Beschreibung des Personalisierungsprozesses, aufgeteilt in einzelne Schritte:
1. Das Telekommunikations-Endgerät 200 befindet sich für den Personalisierungsprozess im Personalisierungsmodus oder wird in diesen Modus versetzt. Die für die Personalisierung erforderlichen Identifikationsdaten 100, die außerhalb des Telekommunikations-Endgerätes 200 vorliegen, werden auf eine der oben beschriebenen Arten in das Gerät 200 eingebracht, nämlich z.B. durch manuelles Eingeben von alphanumerischen Ziffernfolgen, Einlesen eines RFID-Tags, Übertragen der Daten über Bluetooth- oder WLAN-Schnittstelle, Einscannen eines Barcodes, Fotografieren und anschließendes OCR-Extrahieren, Verarbeiten akustischer Information und dergleichen. (WO 2006/ 006001 A1 beschreibt den isolierten Ansatz, außerhalb eines Mobilfunkgerätes ähnlicher Form vorliegende komprimierte Daten mit entsprechenden Einlesetechniken in ein Mobilfunkgerät einzubringen, dort zu dekomprimieren und dadurch automatisch eine spezielle Aktion hervorzurufen, beispielsweise einen Kalendereintrag.)
2. Anschließend initiiert der Benutzer das Einbuchen des Telekommunikations-Endgerätes 200 in das Mobilfunknetz 800. Dies kann beispielsweise mit einem auf allen Sicherheitsmodulen 300 einheitlich aufgebrachten Schlüsseln und Authentisierungsalgorithmen eines virtuellen Netzbetreibers geschehen, der nur einmalig zum ersten Einwählen beim Trustcenter 400 genutzt wird, jedoch in keiner besonderen Verbindung zum spezifischen Netzbetreiber 700, 710, 720 steht, an dessen Bedürfnisse das Telekommunikations-Endgerät 200 durch die Personalisierung erst angepasst werden soll. Vorzugsweise werden aber auch diese Schlüssel und Authentisierungsalgorithmen erstmals vom Benutzer in das Telekommunikations-Endgerät 200 eingebracht, z.B. gleichzeitig mit den Identifikationsdaten 100, um einen weitestgehend universellen Einsatz des Telekommunikations-Endgerätes 200 zu ermöglichen. Die in diesem Schritt aufgebaute Verbindung ist von der Netzinfrastruktur so eingerichtet, dass ausschließlich reiner Datenaustausch zwischen dem Trustcenter 400 des Personalisierers 1000 und dem Sicherheitsmodul 300 möglich ist.
3. Die Identifikationsdaten 100 werden über das Mobilfunknetz 800 an das Trustcenter 400 des Personalisierers 1000 gesendet. Dies kann sowohl vom Benutzer initiiert passieren oder automatisch durch das Sicherheitsmodul 300 angestoßen werden.
4. Das Trustcenter 400 ermittelt durch eine Anfrage der Datenbank 500, welche möglichen Netzbetreiber (Operator) 700, 710, 720 für die erhaltenen Identifikationsdaten 100 zur Verfügung stehen.
5. Die Information über die möglichen Netzbetreiber 700, 710, 720 wird dem Telekommunikations-Endgerät mittels eines geeigneten Datendienstes (z.B. GPRS, SMS) gesendet. Diese Information kann dem Benutzer beispielsweise über ein Display mitteilt werden.
6. Der Benutzer wählt nun den gewünschten Netzbetreiber 700 aus. Diese Auswahl kann vorteilhafterweise durch SIM-Toolkit-Kommandos erfolgen. Damit wird die Information über die Auswahl eines Netzbetreibers 700, 710, 720 dem Sicherheitsmodul 300, beispielsweise einer SIM-Karte, direkt übermittelt.
7. Das Sicherheitsmodul 300 sendet die Auswahl des Benutzers über das Mobilfunknetzwerk 800 an das Trustcenter 400 des Personalisierers 1000. Dies kann wahlweise verschlüsselt und/ oder mit einer kryptographischen Prüfsumme versehen geschehen, um die Kommunikation in gesicherter Weise durchzuführen. (Falls in Schritt 4 nur ein möglicher Netzbetreiber in Frage kommt, können die Schritte 5 bis 7 entfallen)
8. Im Trustcenter 400 werden nun die entsprechenden Personalisierungsdaten, vornehmlich die netzbetreiberspezifischen Daten wie Authentisierungsalgorithmus und dazugehörige Schlüssel, aber möglicherweise auch Programmcode für zusätzliche Anwendungen, einer Datenbank 500 entnommen.
9. Die Personalisierungsdaten werden an das Sicherheitsmodul 300 gesendet. Dies erfolgt vorzugsweise verschlüsselt und/oder mit einer kryptographischen Prüfsumme versehen, um die Kommunikation in gesicherter Weise durchzuführen.
10. Im Sicherheitsmodul 300 werden die erhaltenen Daten auf Korrektheit überprüft und im positiven Fall anschließend an entsprechender Stelle in das Sicherheitsmodul 300 integriert.
11. Bei fehlerfreiem Verlauf des letzen Schrittes erhält das Trustcenter 400 vom Sicherheitsmodul 300 eine Nachricht darüber. Damit ist das Sicherheitsmodul 300 für einen neuen Netzbetreiber 700 personalisiert und kann in normalen Betrieb genommen werden, sobald es vom Netzbetreiber 700 freigeschaltet ist.
12. Die Information über den erfolgreichen Transfer der Personalisierungsdaten, den das Trustcenter 400 vom Sicherheitsmodul 300 erhält, wird dem Netzbetreiber 700 weitergeleitet. Diese Daten entsprechen im wesentlichen den heute als "response-Daten" von den Personalisierern an die Netzbetreiber übergebenen Daten. Nach korrektem Eingang dieser Daten wird der Netzbetreiber 700 das Sicherheitsmodul 300 freischalten, sodass das entsprechende Telekommunikations-Endgerät 200 in den normalen Modus zurückversetzt und für gewöhnliche Kommunikationszwecke benutzt werden kann.

Im folgenden wird eine bevorzugte Möglichkeit zur technischen Realisierung der Übertragung von Daten zwischen dem Trustcenter 400 und dem Sicherheitsmodul 300 des Telekommunikations-Endgerätes 200 beschrieben, dies insbesondere bezüglich der im vorangehenden mit 9, 10 und 11 bezeichneten Schritte.

Vorzugsweise dient als Telekommunikations-Endgerät 200 ein J2ME-fähiges Mobiltelefon mit integriertem Sicherheitsmodul 300 nach den JavaCard 2.x und den Global Platform 2.2.1 Standards. Auf dem Sicherheitsmodul 300 befinden sich zunächst keine Java Applets und keine Global Platform Security Domains. Die Schlüssel der Issuer Security Domain (ENC, KEK, MAC) sind Initialschlüssel, welche entweder chipindividuell sein oder einem Master-Key-Set entsprechen können. In diesem Zustand ist das Sicherheitsmodul 300 für keine Anwendung verwendbar, insbesondere nicht zur Authentisierung bei einem Netzbetreiber 700.

Bezugnehmend auf die Figuren 2 bis 5 wird nun der Kommunikationsprozess zwischen dem Sicherheitsmodul 300 des Mobiltelefons 200 und dem Server 600 des Trustcenters 400 des Personalisierers 1000 detailliert beschrieben.

Bevorzugt wird zur Kommunikation zwischen dem Sicherheitsmodul 300 und dem Server 600 das sogenannte APDU-Protokoll (application protocol data units) verwendet. Daten werden dabei blockweise übertragen, wobei ein Datenblock immer entweder aus einem Kommando oder einer Antwort auf ein Kommando besteht. Dabei übernimmt das Sicherheitsmodul üblicherweise die passive (slave) Rolle und erwartet Kommandos, die vom Server (master) gesendet werden und auf welche es dann antwortet. Die spezifizierte Struktur der Datenblöcke lässt in jedem Datenblock Raum (data field) zur Übertragung von beliebigen Daten. Es werden also die vom Server 600 an des Sicherheitsmodul 300 zu übertragenen Daten in APDU-Kommandos verpackt. Eine Reihe solcher Kommandos wird zu einer Kommandosequenz zusammengefasst. Fig. 2 zeigt exemplarisch eine in XML (Extensible Markup Language) kodierte Kommandosequenz.

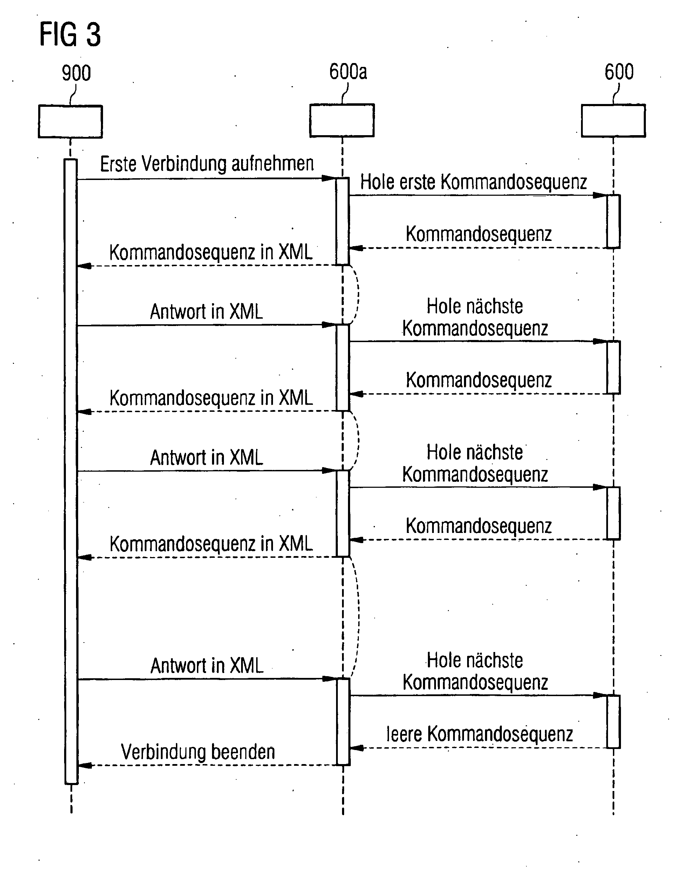

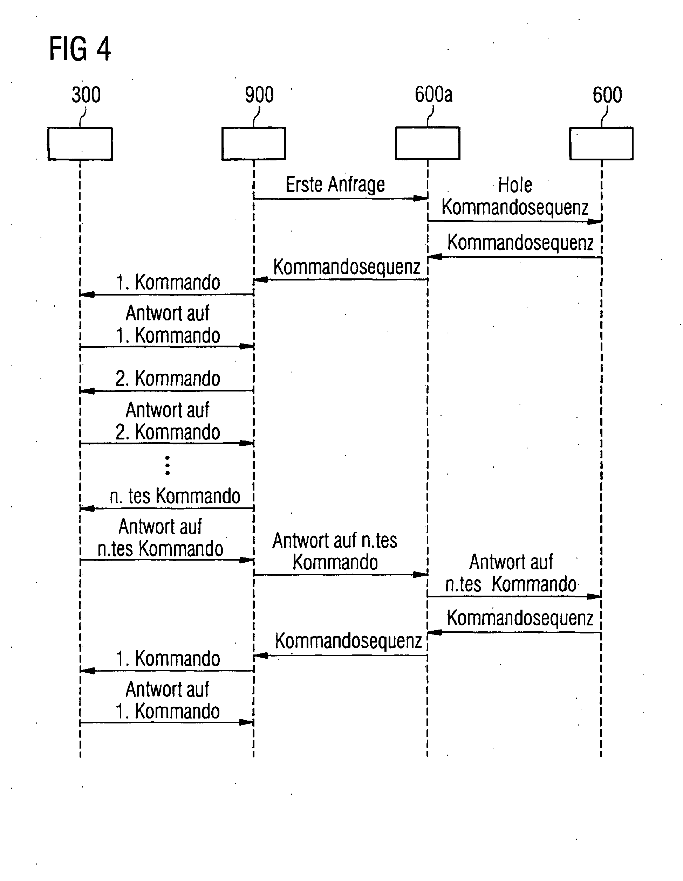

In den Figuren 3 und 4 ist schematisch die Kommunikation zwischen dem Sicherheitsmodul 300 und dem Server 600 dargestellt. Auf dem Mobiltelefon 200 befindet sich ein sogenanntes MIDlet 900 (nach J2ME, MIDP2.0 Spezifikation), das über eine API (application programming interface) Zugang zum Sicherheitsmodul 300 des Mobiltelefons 200 besitzt und mit dem Server 600 Kontakt aufnehmen kann.

Diese Kontaktaufnahme erfolgt über eine Schnittstelle 600a des Servers, über ein sogenanntes Servlet. Fig. 3 illustriert die Kommunikation zwischen dem Midlet 900 und dem Server 600 über das Servlet 600a. Nach einer ersten Kontaktaufnahme durch das MIDlet 900 holt das Servlet 600a beim Server 600 die erste Kommandosequenz, die es dann, beispielsweise in XML kodiert, an das MIDlet 900 sendet. In Fig. 4 ist gezeigt, wie dann das MIDlet 900 diese Kommandosequenz weiterverarbeitet. Die einzelnen Kommandos werden nacheinander vom MIDlet 900 an das Sicherheitsmodul 300 gesendet, welches jeweils mit einer Antwort auf das zuvor erhaltene Kommando antwortet. Nachdem alle Kommandos, z.B. n Kommandos, abgearbeitet sind, sendet das MIDlet 900 nun die Antwort des Sicherheitsmoduls 300 auf das n-te Kommando über das Servlet 600a an den Server 600. Nun kann sich der Prozess wie oben beschrieben, in Abhängigkeit von der Antwort des Sicherheitsmoduls 300 auf das n-te Kommando und in Abhängigkeit von der Fülle der zu übertragenden Daten und damit der zu übertragenden Kommandosequenzen, mehrfach wiederholen, wie es in den Figuren 3 und 4 angedeutet ist.

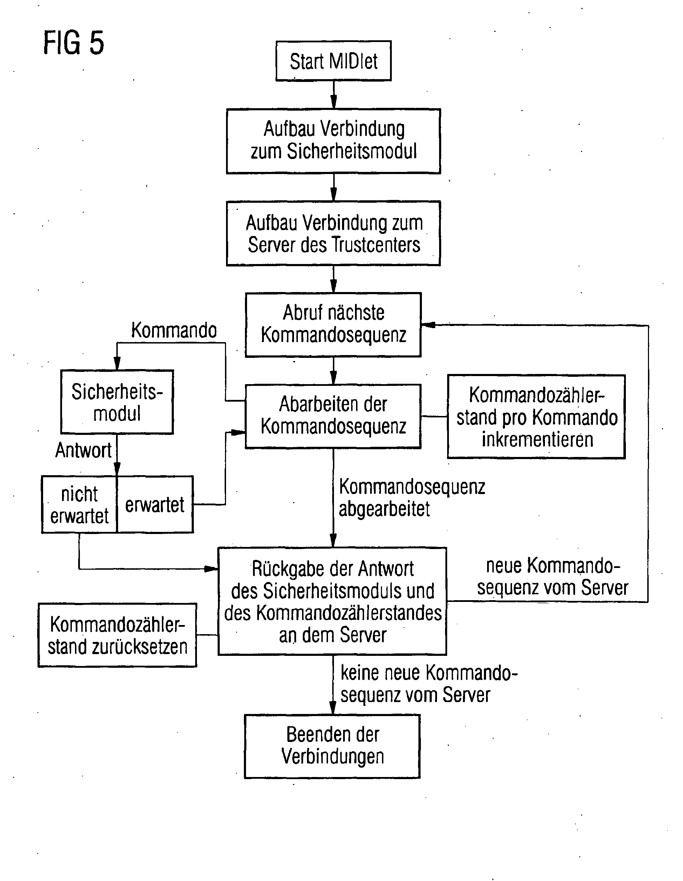

Im Folgenden wird mit Bezug auf Figur 5 der Prozess innerhalb des MIDlet 900 genauer dargestellt. Das MIDlet 900, das über eine API bereits eine Verbindung zum Sicherheitsmodul 300 hergestellt hat, öffnet einen Kanal zum Server 600 des Personalisierers 1000, um den Personalisierungsvorgang zu starten, beispielsweise über eine https-Verbindung. Der Server 600 überprüft, ob es sich um eine gültige Anfrage handelt und bereitet im positiven Fall die für das Sicherheitsmodul 300 bestimmten Daten in Form einer Kommandosequenz vor. Diese Kommandosequenz wird beispielsweise als Antwort auf den https-request an das MIDlet 900 gesendet. Die Kommandosequenz wir nun vom MIDlet 300 abgearbeitet, indem die einzelnen Kommandos aus der Kommandosequenz extrahiert und nacheinander an das Sicherheitsmodul 300 gesendet werden, das jeweils auf ein solches Kommando antwortet, wie bereits oben beschrieben. Antwortet das Sicherheitsmodul 300 wie erwartet, so wird das nächste Kommando aus der Sequenz an das Sicherheitsmodul 300 geschickt. Weicht dagegen die Antwort von der erwarteten Antwort ab, beendet das MIDlet 900 die Übertragung der Kommandosequenz und sendet die letzte vom Sicherheitsmodul 300 erhaltene Antwort an den Server 600 des Personalisierers 1000 zurück, zusammen mit einem Kommandozählerstand. In dem Fall, dass alle Kommandos der Sequenz erfolgreich abgearbeitet worden sind, sendet das MIDlet die letzte vom Sicherheitsmodul 300 erhaltene Antwort und den Kommandozählerstand an den Server.

Damit der Server 600 überprüfen kann, ob die gesendeten Daten korrekt an das Sicherheitsmodul 300 übertragen worden sind, benötigt er lediglich die Antwort des Sicherheitsmoduls 300 auf das letzte Kommando und den Kommandozählerstand, der festhält, wie viele Kommandos vom MIDlet 900 an das Sicherheitsmodul 300 übertragen worden sind, indem er, nachdem er vor Bearbeitung einer neuen Kommandosequenz auf 0 zurückgesetzt worden ist, jeweils nach Bearbeitung eines Kommandos um 1 inkrementiert wird. Somit spart das Übertragen von Kommandosequenzen vom Server 600 an das Sicherheitsmodul 300 im Vergleich zum Übertragen einzelner Kommandos Kommunikationsvolumen und macht die Übermittlung der Daten schneller und effektiver, da der Server 600 nicht die Antwort des Sicherheitsmoduls 300 auf jedes einzelne Kommando abzuwarten hat und nicht jede solche Antwort auch an den Server übertragen werden muss.

Die Kommandosequenz kann beispielsweise in XML kodiert sein (siehe Fig. 2). Alternativ sind auch andere Formate denkbar, wie z.B. durch Kommata getrennte Kommandos oder dergleichen. In der in Fig. 2 beispielhaft gezeigten Kommandosequenz ist das Feld "ExpectedResponse" jeweils mit "90 00" gefüllt. Dieses Feld "90 00" ist optional, da dies die Standardantwort einer JavaCard im Fall eines korrekt ausgeführten Kommandos ist und implizit angenommen wird, dass bei dieser Antwort eine erfolgreiche weitere Abarbeitung der Kommandosequenz garantiert werden kann. Somit muss diese Standard-Expected-Response nicht mit übertragen werden, was zusätzlich Übertragungsvolumen einspart.

Sowohl bei vollständiger korrekter Abarbeitung der Kommandosequenz als auch bei Abbruch durch unerwartete Antwortdaten des Sicherheitsmoduls 300 kann nach Übermittlung der Antwortdaten des Sicherheitsmoduls 300 über das MIDlet 900 zum Server 600 des Personalisierers 1000 von diesem erneut eine Kommandosequenz gesendet werden und der Prozess beginnt wie oben beschrieben von neuem. Erfolgt dies nicht, so beendet das MIDlet 900 die Kommunikation mit dem Server 600 und gibt gegebenenfalls eine Statusmeldung an den Benutzer.

Die Verbindung des MIDlets zum Server 600 des Personalisierers 1000 einerseits und zum Sicherheitsmodul 300 des Mobiltelefons 200 andererseits können in verschiedenen Ausführungsthreads enthalten sein.

Ähnlich der Personalisierung von Sicherheitsmodulen in Telekommunikations-Endgeräten wie oben beschrieben, können Sicherheitsmodule auch für verschiedene Anwendungen von Serviceprovidern eingerichtet werden, beispielsweise für NFC- Anwendungen. Near Field Communication (NFC) ist eine Technologie zum kontaktlosen Übertragen von Daten mittels magnetischer Felder im Frequenzbereich 13,56 MHz über eine kurze Distanz (bis zu ca. 20 cm) und erlaubt Geräten, sowohl als kontaktlose Karte als auch als Kartenleser zu agieren. Derzeit sind Datenübertragungsraten von 424KB/sek erreichbar. Eine breite Anwendung der Technologie in sicherheitssensiblen Anwendungsgebieten wird bisher dadurch verhindert, dass der NFC- Standard selbst keine Sicherheitsmaßnahmen vorsieht. Sicheres NFC, realisiert in Kombination von standardmäßigen NFC-Geräten mit Sicherheitsmodulen wie z.B. Embedded Security Controller, SIM-Karten, Secure Flash Cards und dergleichen, ermöglicht eine Vielzahl von Anwendungen, darunter Bezahlfunktionen, Zutrittskontrolle, Digital Rights Management (DRM), Identitätskontrolle, Herunterladen von Inhalten, Ticketing, Gerätekonfiguration und dergleichen. Es ist möglich, innerhalb eines Sicherheitsmoduls eines Telekommunikations-Endgerätes unabhängig voneinander mehrere NFC-Applikationen zu installieren und handzuhaben.

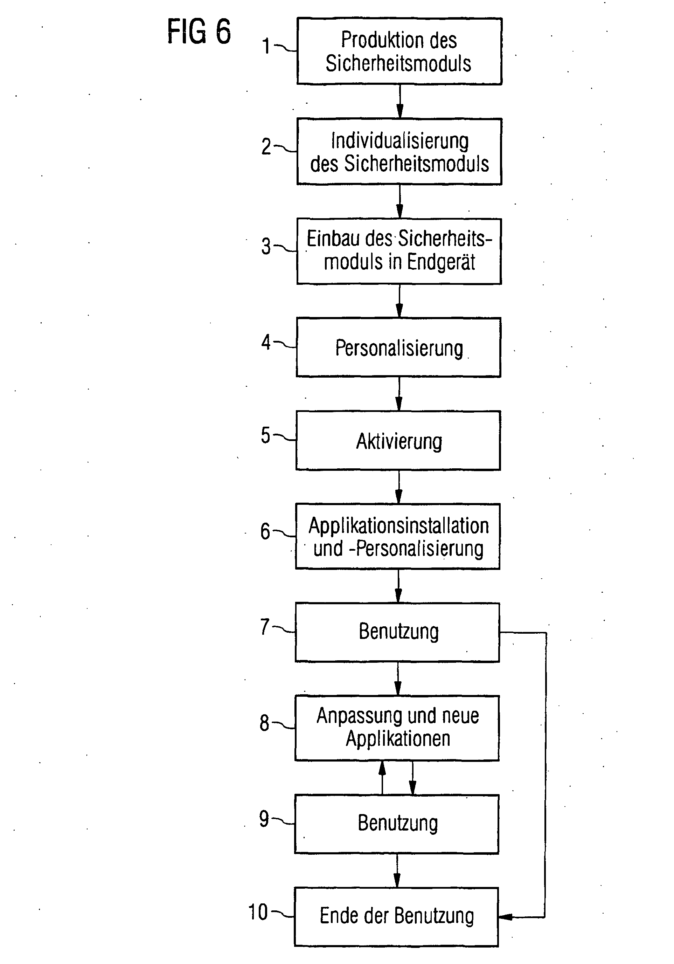

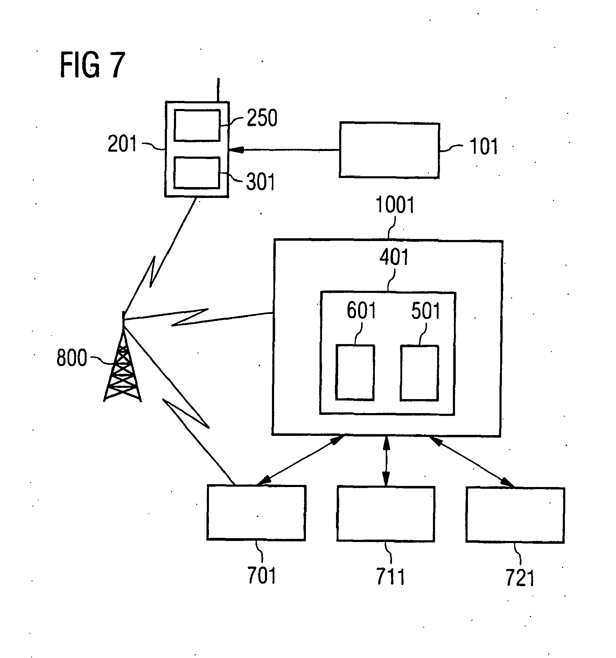

Im Folgenden wird anhand der Fig. 6 und 7 ein System zum Management von Sicherheitsmodulen in NFC-fähigen Telekommunikations-Endgeräten über eine Luftschnittstelle (OTA, Over The Air) erläutert, das im folgenden OTA-Secure-Chip-Management-System genannt wird. Zur Beschreibung des Gesamtsystems zeigt Fig. 6 den Lebenszyklus eines Sicherheitsmoduls, unterteilt in zehn Phasen. Nachdem das Sicherheitsmodul produziert wurde (Phase 1), erfolgt in Phase 2 die Individualisierung, in der z.B. der initiale ISD-Schlüssel (ISD, issuer security domain) in das Sicherheitsmodul eingebracht wird und dieses eine eindeutige ID erhält. In Phase 3 wird das Sicherheitsmodul in ein Endgerät eingebaut. Die Personalisierung an den Netzbetreiber, wie sie oben beschrieben wurde, erfolgt in Phase 4, bevor dann in Phase 5, in der sogenannten Aktivierungsphase, Vorbereitungen getroffen werden, um neue Applikationen, insbesondere NFC-Applikationen, in das Sicherheitsmodul einzubringen. In Phase 6 wird dann die entsprechende Applikationssoftware im Sicherheitsmodul installiert und an den Benutzer angepasst, bevor Phase 7 als Benutzungsphase beginnen kann. In Phase 8 erfolgen eventuelle Anpassungen der Applikationen oder es werden neue Applikationen installiert, die in Phase 9, einer weiteren Benutzungsphase, zur Anwendung kommen (ein Wechsel zwischen den Phasen 8 und 9 kann mehrfach stattfinden), bevor in Phase 10 der Lebenszyklus des Sicherheitsmoduls endet.

Die Phasen 5, 6 und 8, in denen das OTA-Secure-Chip-Management-System zum Einsatz kommt, werden im folgenden genauer beschrieben. Die technische Realisierung der Übertragung der Daten zwischen einem Serviceprovider 1001 und einem Sicherheitsmodul 301 eines Telekommunikations-Endgerätes 201 erfolgt bevorzugt wie bereits oben im bevorzugten Ausführungsbeispiel mit Bezug auf die Figuren 3 bis 5 beschrieben.

Fig. 7 zeigt die gesamte Systemarchitektur, in der vorgesehen ist, dass ein Card Application Management Server (CAMS) 601, der bei einem Trustcenter 401 eines Serviceproviders 1001 beheimatet ist, direkt mit dem Sicherheitsmodul 301 eines NFC-fähigen Telekommunikations-Endgerätes 201, das ein NFC-Modul 250 umfasst, kommuniziert, um das Sicherheitsmodul für Applikationen eines oder mehrerer Anwendungsprovider 701, 711, 721 einzurichten. Diese Kommunikation verläuft über ein Mobilfunknetzwerk 800 ausschließlich über eine Luftschnittstelle. Nachdem die Identifikationsdaten 101, die dem Benutzer außerhalb des Telekommunikations-Endgerätes vorliegen und auf eine der oben beschriebenen Arten in der Personalisierungsphase (Phase 4) in das Telekommunikations-Endgerät 201 eingebracht worden sind, kann das Sicherheitsmodul 301 in Phase 5 aktiviert werden.

### Aktivierung (Phase 5)

In diesem Schritt wird das Sicherheitsmodul 301 auf die Anforderungen einer oder mehrerer spezifischer Applikationen vorbereitet. Der initiale ISD-Schlüssel (ISD, issuer security domain), der während Phase 2 in das Sicherheitsmodul 301 eingebracht worden ist, wird gegen den serviceproviderspezifischen ISD-Schlüssel über eine Luftschnittstelle ausgetauscht. Damit erkennt das Sicherheitsmodul 301, dass vom Serviceprovider 1001 gesendete Daten akzeptiert und installiert werden dürfen. Der gleiche Schlüssel wird auch in einer Device-Management-Datenbank 501 des Serviceproviders 1001 eingetragen.

### Installation neuer Anwendung-sproviderbereiche (in Phase 6)

In diesem Schritt werden für jeden vom Benutzer gewählten Anwendungsprovider 701, 711, 721 eigene Bereiche, sogenannte SSDs (supplementary security domains) auf dem Sicherheitsmodul 301 reserviert und jeweils mit einem eigenen SSD-Schlüssel ausgestattet, welche ebenso in der Device-Management-Datenbank 501 des Serviceproviders 1001 gespeichert werden. Diese Bereiche können als "sichere Container" angesehen werden, in welchen die entsprechenden Anwendungen sicher vor äußerem Zugriff gespeichert und ausgeführt werden können. Mehrere Anwendungsprovider 701, 711, 721 können ihre eigenen SSDs auf demselben Sicherheitsmodul 301 installieren, die unabhängig und störungsfrei nebeneinander betrieben werden können. Auch dieser Schritt erfolgt über eine Luftschnittstelle.

### Herunterladen von Anwendungen (in Phase 6)

Nachdem jeder Anwendunsprovider 701, 711, 721 seinen eigenen Bereich auf dem Sicherheitsmodul 301 zugewiesen bekommen hat, kann das Herunterladen der Anwendungssoftware gestartet werden. Dies erfolgt über eine Luftschnittstelle und jeweils mit dem entsprechenden SSD-Schlüssel gesichert. Das Herunterladen kann sowohl vom Serviceprovider 1001, der auch Trusted Third Party (TTP) genannt wird und das Management des Sicherheitsmodul 301 wie hier beschrieben durchführt, initiiert werden, als auch vom Anwendungsprovider 701, 711, 721 selbst.

### Personalisierung der Anwendung (in Phase 6)

In diesem Schritt wird die jeweilige Applikation auf den Benutzer eingerichtet, indem die der Applikation angepassten Benutzerdaten mit dem jeweiligen SSD-Schlüssel codiert an das Sicherheitsmodul 301 übertragen werden. Wiederum kann dieser Schritt sowohl von der TTR 1001 als auch vom Anwendungsprovider 701, 711, 721 vorgenommen werden und erfolgt über eine Luftschnittstelle.

### Anpassung und neue Applikationen (Phase 8)

Während der Betriebsdauer muss das Sicherheitsmodul 301 an neue Vorgaben der Anwendungsprovider 701, 711, 721 angepasst werden und kann gegebenenfalls neue Applikationen erhalten. Auch diese Anpassung kann durch die TTP 1001 oder den Anwendungsprovider 701, 711, 721 initiiert und durchgeführt werden und erfolgt über eine Luftschnittstelle.

## Patentansprüche

1. Verfahren zur Personalisierung eines Sicherheitsmoduls (300) in einem Telekommunikations-Endgerät (200), umfassend die folgenden Schritte:
a) Einbringen von zur Personalisierung notwendigen Identifikationsdaten (100) in das Sicherheitsmodul (300) des Telekommunikations-Endgerätes (200),
b) Übertragen der eingebrachten Identifikationsdaten (100) an ein Trustcenter (400),
c) Überprüfen der übertragenen Identifikationsdaten (100) auf Korrektheit durch das Trustcenter (400), und
d) im Fall von korrekten Daten, vom Trustcenter (400) initiiertes Einbringen der netzbetreiberspezifischen Daten in das Sicherheitsmodul (300) des Telekommunikations-Endgerätes (200),
**dadurch gekennzeichnet,**
**dass** das Sicherheitsmodul (300) vor Einbringung der Identifikationsdaten (100) keine netzbetreiberspezifischen Daten enthält,
**dass** die Identifikationsdaten (100) einem Benutzer des Telekommunikations-Endgerätes (200) außerhalb des Telekommunikations-Endgerätes (200) vorliegen, und
**dass** das Einbringen der Identifikationsdaten (100) in das Sicherheitsmodul (300) des Telekommunikations-Endgerätes (200) vom Benutzer durchgeführt wird.

2. Verfahren gemäß Anspruch 1, **dadurch gekennzeichnet, dass** das Einbringen der Identifikationsdaten (100) in das Sicherheitsmodul (300) des Telekommunikations-Endgerätes (200) eine der folgenden Schritte umfasst: manuelles Eingeben, Lesen eines RFID-Tags, Übertragen per Bluetooth- oder WLAN-Schnittstelle, Fotografieren und mittels OCR Extrahieren, Einscannen eines Barcodes, Übertragen akustischer Daten.

3. Verfahren gemäß Anspruch 1 oder 2, **dadurch gekennzeichnet, dass** die Schritte b) und d) über eine Luftschnittstelle vorgenommen werden.

4. Verfahren gemäß einem der Ansprüche 1 bis 3, **dadurch gekennzeichnet, dass** der Schritt b) vom Benutzer initiiert wird.

5. Verfahren gemäß einem der Ansprüche 1 bis 3, **dadurch gekennzeichnet, dass** der Schritt b) automatisch vom Sicherheitsmodul (300) angestoßen wird.

6. Verfahren gemäß einem der Ansprüche 1 bis 5, **dadurch gekennzeichnet, dass** das Telekommunikations-Endgerät (200) vor dem Schritt a) in den Personalisierungsmodus versetzt wird.

7. Verfahren gemäß einem der Ansprüche 1 bis 6, **dadurch gekennzeichnet, dass** der Schritt d) folgende Teilschritte umfasst:
i. Aufbereiten der an das Sicherheitsmodul (300) zu übertragenden Daten als Sequenz von Kommandos und Übertragen dieser Kommandosequenz an das Telekommunikations-Endgerät (200),
ii. Extrahieren der Kommandos aus der Sequenz durch das Telekommunikations-Endgerät (200) und Übermitteln der Kommandos an das Sicherheitsmodul (300),
iii. Übertragen einer vom Sicherheitsmodul (300) erhaltenen Antwort durch das Telekommunikations-Endgerät (200) an das Trustcenters (400),
iv. Auswerten der Antwort durch das Trustcenters (400), und
v.
• Beenden der Kommunikation mit dem Telekommunikations-Endgerät (200), falls alle Daten korrekt übertragen worden sind und keine weiteren Daten mehr zu übertragen sind, oder
• Beenden der Kommunikation mit dem Telekommunikations-Endgerät (200), falls falls beim Übertragen der letzten Kommandosequenz ein unbehebbarer Fehler aufgetreten ist, oder
• Erneutes Senden der gleichen Kommandosequenz, startend mit Teilschritt i., falls beim Übertragen der letzten Kommandosequenz ein behebbarer Fehler aufgetreten ist, oder
• Senden einer weiteren Kommandosequenz, startend mit Teilschritt i., falls die letzte Kommandosequenz korrekt übertragen worden ist und noch weitere Daten zu übertragen sind.

8. Verfahren gemäß Anspruch 7, **dadurch gekennzeichnet, dass** in Teilschritt i. die Kommandosequenz in einem Block an das Telekommunikationsendgerät (200) übertragen wird, wobei dem Trustcenter (400) zum Überprüfen der Korrektheit der Übertragung des gesamten Blockes eine Antwort des Telekommunikations-Endgerätes (200) auf das letzte Kommando der Sequenz genügt.

9. Verfahren gemäß Anspruch 7 oder 8, **dadurch gekennzeichnet,**
**dass** das Übermitteln der Kommandos in Teilschritt ii. durch sequentielles Übermitteln einzelner Kommandos erfolgt, wobei ein Überprüfen der Korrektheit der Übermittlung einzelner Kommandos anhand einer Antwort des Sicherheitsmoduls (300) auf jedes einzelne Kommando erfolgt, und
**dass** das Übermitteln der Kommandos abgebrochen wird, falls entweder keine Kommandos mehr zu übermitteln sind oder eine Übermittlung nicht korrekt erfolgt ist, und
**dass** die letzte vom Sicherheitsmodul (300) erhaltene Antwort in Teilschritt iii. an das Trustcenters (400) übertragen wird.

10. Verfahren gemäß einem der Ansprüche 7 bis 9, **dadurch gekennzeichnet, dass** als Telekommunikations-Endgerät (200) ein J2ME-fähiges Endgerät mit integrierter JavaCard verwendet wird.

11. Verfahren gemäß einem der Ansprüche 7 bis 10, **dadurch gekennzeichnet, dass** die Kommunikation des Trustcenters (400) mit dem Sicherheitsmodul (300) über ein auf dem Endgerät installiertes MIDIet (900) erfolgt.

12. Verfahren gemäß einem der Ansprüche 7 bis 11, **dadurch gekennzeichnet, dass** die Verbindungen des Endgerätes (200) zum Trustcenter (400) einerseits und zum Sicherheitsmodul (300) andererseits in unabhängigen Ausführungsthreads realisiert werden.

13. Verfahren gemäß einem der Ansprüche 7 bis 12, **dadurch gekennzeichnet, dass** im Schritt i. die Kommandosequenz in XML codiert wird.

14. Verfahren gemäß einem der Ansprüche 1 bis 13, **dadurch gekennzeichnet, dass** es sich bei dem Telekommunikations-Endgerät (200) um ein Mobiltelefon oder ein PDA (Personal Digital Assistent) handelt.

## Claims

1. A method for personalizing a security module (300) in a telecommunication terminal (200), comprising the following steps of:
a) incorporating identification data (100) required for personalization into the security module (300) of the telecommunication terminal (200),
b) transferring the incorporated identification data (100) to a trust center (400),
c) checking the transferred identification data (100) for correctness by the trust center (400), and
d) in the case of correct data, incorporation initiated by the trust center (400) of the network operator-specific data into the security module (300) of the telecommunication terminal (200),
**characterized in that**
the security module (300) does not contain any network operator-specific data (100) before incorporation of the identification data,
the identification data (100) are present for a user of the telecommunication terminal (200) outside of the telecommunication terminal (200), and
the incorporation of the identification data (100) into the security module (300) of the telecommunication terminal (200) is carried out by the user.

2. The method according to claim 1, **characterized in that** the incorporation of the identification data (100) into the security module (300) of the telecommunication terminal (200) comprises any of the following steps of: manual inputting, reading of an RFID tag, transferring via Bluetooth or WLAN interface, photographing and extracting by means of OCR, scanning of a bar code, transferring of acoustic data.

3. The method according to claim 1 or 2, **characterized in that** the steps b) and d) take place via an air interface.

4. The method according to any of the claims 1 to 3, **characterized in that** the step b) is initiated by the user.

5. The method according to any of the claims 1 to 3, **characterized in that** the step b) is triggered automatically by the security module (300).

6. The method according to any of the claims 1 to 5, **characterized in that** the telecommunication terminal (200) is set to the personalization mode before the step a).

7. The method according to any of the claims 1 to 6, **characterized in that** the step d) comprises the following partial steps of:
i. preparing the data to be transferred to the security module (300) as a sequence of commands, and transferring said command sequence to the telecommunication terminal (200),
ii. extracting the commands from the sequence by the telecommunication terminal (200), and transmitting the commands to the security module (300),
iii. transferring a response received from the security module (300) by the telecommunication terminal (200) to the trust center (400),
iv. evaluating the response by the trust center (400), and
v.
• terminating the communication with the telecommunication terminal (200), if all data have been transferred correctly and no further data remain to be transferred, or
• terminating the communication with the telecommunication terminal (200), if upon transferring the last command sequence a fatal error has occurred, or
• re-sending the same command sequence, starting with partial step i., if upon transferring the last command sequence a non-fatal error has occurred, or
• sending a further command sequence, starting with partial step i., if the last command sequence has been transferred correctly and further data remain to be transferred.

8. The method according to claim 7, **characterized in that** in partial step i. the command sequence is transferred to the telecommunication terminal (200) in a block, wherein a response by the telecommunications terminal (200) to the last command of the sequence is sufficient for the trust center (400) to check the correctness of transferral of the complete block.

9. The method according to claim 7 or 8, **characterized in that**
the transmission of the commands in partial step ii. takes place by sequential transmission of individual commands, wherein a check of the correctness of the transmission of individual commands takes place on the basis of a response by the security module (300) to each individual command, and
the transmission of the commands is aborted, if either no commands remain to be transmitted or a transmission has not taken place correctly, and
the last response received from the security module (300) is transferred to the trust center (400) in partial step iii.

10. The method according to any of claims 7 to 9, **characterized in that** as telecommunication terminal (200) a J2ME-enabled terminal with integrated JavaCard is used.

11. The method according to any of the claims 7 to 10, **characterized in that** the communication of the trust center (400) with the security module (300) takes place via a MIDIlet (900) installed in the terminal.

12. The method according to any of the claims 7 to 11, **characterized in that** the connections of the terminal (200) to the trust center (400) on the one hand and to the security module (300) on the other hand are realized in independent execution threads.

13. The method according to any of the steps 7 to 12, **characterized in that** in step i. the command sequence is XML-coded.

14. The method according to any of the claims 1 to 13, **characterized in that** the telecommunication terminal (200) is a mobile telephone or a PDA (personal digital assistant).

## Revendications

1. Procédé de personnalisation d'un module de sécurité (300) dans un terminal de télécommunication (200), comprenant les étapes suivantes:
a) introduction de données d'identification (100) nécessaires à la personnalisation dans le module de sécurité (300) du terminal de télécommunication (200),
b) transfert des données d'identification (100) introduites à un Trustcenter (400),
c) vérification des données d'identification (100) transférées quant à leur exactitude par le Trustcenter (400), et
d) dans le cas de données exactes, introduction, initiée par leTrustcenter (400), des données spécifiques à l'opérateur de réseau dans le module de sécurité (300) du terminal de télécommunication (200),
**caractérisé en ce**
**que**, avant l'introduction des données d'identification (100), le module de sécurité (300) ne contient pas de données spécifiques à l'opérateur de réseau,
**que** les données d'identification (100) sont à la disposition d'un utilisateur du terminal de télécommunication (200) à l'extérieur du terminal de télécommunication (200), et
**que** l'introduction des données d'identification (100) dans le module de sécurité (300) du terminal de télécommunication (200) est effectuée par l'utilisateur.

2. Procédé selon la revendication 1, **caractérisé en ce que** l'introduction des données d'identification (100) dans le module de sécurité (300) du terminal de télécommunication (200) comprenant une des étapes suivantes: entrée manuelle, lecture d'une étiquette RFID, transfert par interface Bluetooth ou WLAN, photographie et extraction au moyen de OCR, scannage d'un code-barres, transfert des données acoustiques.

3. Procédé selon la revendication 1 ou 2, **caractérisé en ce que** les étapes b) et d) sont accomplies par l'intermédiare d'une interface radio.

4. Procédé selon une des revendications de 1 à 3, **caractérisé en ce que** l'étape b) est initiée par l'utilisateur.

5. Procédé selon une des revendications de 1 à 3, **caractérisé en ce que** l'étape b) est automatiquement déclenchée par le module de sécurité (300).

6. Procédé selon une des revendications de 1 à 5, **caractérisé en ce que** le terminal de télécommunication (200) est, avant l'étape a), mis sur le mode personnalisation.

7. Procédé selon une des revendications de 1 à 6, **caractérisé en ce que** l'étape d) comprenant les étapes partielles suivantes:
i. préparation des données à transférér au module de sécurité (300) en tant que séquence de commandes et transfert de cette séquence de commandes au terminal de télécommunication (200),
ii. extraction des commandes à partir de la séquence par le terminal de télécommunication (200) et transmission des commandes au module de sécurité (300),
iii. transfert, par le terminal de télécommunication (200), d'une réponse reçue de la part du module de sécurité (300) au Trustcenter (400),
iv. évaluation de la réponse par le Trustcenter (400), et
v.
• arrêt de la communication avec le terminal de télécommunication (200) dans le cas où toutes les données ont été transférées avec exactitude et qu'il n'y a plus d'autres données à transférer, ou
• arrêt de la communication avec le terminal de télécommunication (200) dans le cas où, lors du transfert de la dernière séquence de commandes, une erreur irrécupérable est survenue, ou
• nouvel envoi de la même séquence de commandes en commençant par l'étape partielle i., dans le cas où, lors du transfert de la dernière séquence de commandes, une erreur récupérable est survenue, ou
• envoi d'une autre séquence de commandes en commençant par l'étape partielle i., dans le cas où la dernière séquence de commandes a été transférée avec exactitude et qu'il y a d'autres données à transférer.

8. Procédé selon la revendication 7, **caractérisé en ce que**, à l'étape partielle i., la séquence de commandes est transférée en un bloc au terminal de télécommunication (200), une réponse du terminal de télécommunication (200) à la dernière commande de la séquence suffisant au Trustcenter (400) pour la vérification de l'exactitude du transfert de la totalité du bloc.

9. Procédé selon la revendication 7 ou 8, **caractérisé en ce que** la transmission des commandes à l'étape partielle ii. a lieu par transmission séquentielle de différentes commandes, une vérification de l'exactitude de la transmission de différentes commandes ayant lieu sur la base d'une réponse du module de sécurité (300) à chaque différente commande, et
**en ce que** la transmission des commandes est interrompue dans le cas où soit il n'y a plus de commandes à transmettre, soit une transmission n'a pas eu lieu avec exactitude, et
**en ce que** la dernière réponse reçue de la part du module de sécurité (300) est transférée au Trustcenter (400) à l'étape partielle iii.

10. Procédé selon une des revendications de 7 à 9, **caractérisé en ce que**, en tant que terminal de télécommunication (200), c'est un terminal compatible avec J2ME et muni d'une carte Java intégrée qui est utilisé.

11. Procédé selon une des revendications de 7 à 10, **caractérisé en ce que** la communication du Trustcenter (400) avec le module de sécurité (300) a lieu par l'intermédiaire d'un MIDIet (900) installé sur le terminal.

12. Procédé selon une des revendications de 7 à 11, **caractérisé en ce que** les connexions du terminal(200) au Trustcenter (400) d'une part et au module de sécurité (300) d'autre part sont réalisées dans des threads d'exécution indépendants.

13. Procédé selon une des revendications de 7 à 12, **caractérisé en ce que**, à l'étape i., la séquence de commandes est codée dans XML.

14. Procédé selon une des revendications de 1 à 13, **caractérisé en ce que** le terminal de télécommunication (200) consiste en un téléphone mobile ou un PDA (Personal Digital Assistent).
